# EUROPÄISCHE PATENTSCHRIFT

(11) **EP 1 684 393 B1**
(45) Veröffentlichungstag und Bekanntmachung des Hinweises auf die Patenterteilung: **23.04.2008**
(21) Anmeldenummer: 06405020.6
(22) Anmeldetag: 20.01.2006
(51) Int. Cl.: H02G 3/30, H02G 3/04

(54) **Vorrichtung für die Medien- und Energieversorgung und Installationsverfahren**
Installation for supplying media and energy and method for mounting
Installation d'alimentation de fluides et d'énergie et méthode de montage

(30) Priorität: 21.01.2005 CH 902005
(43) Veröffentlichungstag der Anmeldung: 26.07.2006
(73) Patentinhaber: ZURECON AG, CH-8003 Zürich (CH)
(72) Erfinder: Pfluger, Gerd, CH-4625 Oberbuchsiten (CH)
(74) Vertreter: Rutz, Peter

(56) Entgegenhaltungen:
- DE-A- 3 008 510
- DE-U- 20 121 189
- DE-U1- 29 805 278
- FR-A- 2 669 708
- JP-A- 56 103 919

## Beschreibung

Die Erfindung betrifft eine Vorrichtung für die Medien- und Energieversorgung und ein Verfahren zur Installation dieser Vorrichtung nach dem Oberbegriff des Patentanspruchs 1 bzw. 8.

Beispielsweise in Laboratorien oder Werkstätten werden Vorrichtungen für die Medien- und Energieversorgung von Arbeitsplätzen benötigt.

Um Arbeitsplätze in Labors mit Strom, Gas, Wasser, Druckluft und Vakuum usw. zu versorgen und um Gas und Wasser oder dergleichen abzuführen, ist es gemäss der DE 101 27 272 A1 bekannt, Medienzellen, Mediensäulen oder Medienampeln für die Arbeitsplätze vorzusehen. Die entsprechenden Zu- und Ableitungen werden aus dem Boden, einer Wand, oder von oben zwischen der Decke und einer abhängten Decke zugeführt.

Gemäss der DE 101 27 272 A1 gibt es bei diesen Systemen eine Vielzahl von Schnittstellen zwischen dem Laborbauer, der die Labormöbel und die darin vorhandene Installation herstellt, und dem bauseitigen Installateur, der die Installationen im Boden, einer Wand oder einer Decke ausführt. Das Anschliessen der in den Möbeln vorhandenen Installationen an die bauseitigen Installationen kann von dem bauseitigen Installateur oder dem Laborbauer ausgeführt werden. Aufgrund dieser Schnittstellen entstehen Fehlerquellen. Hinzu kommt, dass die Verlegung von Leitungen im Boden, in einer Wand oder an einer Rohdecke oder zwischen einer Rohdecke und einer abgehängten Decke sehr aufwendig ist. Revisionen und nachträgliche Änderungen oder Ergänzungen erfordern einen hohen Arbeitsaufwand und sind nur mit hohen Kosten möglich.

In der DE 101 27 272 A1 wird daher vorgeschlagen, dass ein von einer Installationsstation ausgehendes, dicht unterhalb der Decke des Laborraums anzuordnendes Tragelement für Installationsleitungen vorgesehen ist, an welches quer dazu verlaufende Ausleger angeschlossen sind, die von den Installationsleitungen des Tragelementes abgezweigte Installationsleitungen aufweisen und die mit Geräteanschlüssen versehen sind. Diese Ausleger bilden Medienzellen, die sich oberhalb von Tischplatten befinden.

Der in der DE 101 27 272 A1 vorgeschlagenen Lösung liegt dabei der Gedanke zugrunde, die Verlegung von Rohren, Kabeln und Leitungen innerhalb eines Raumes nicht mehr in das Bauwerk zu integrieren, sondern vielmehr zu einem Bestandteil der Laboreinrichtung zu machen. Die betreffenden Installationen werden mit dem Aufstellen der Laboreinrichtung verlegt und montiert und können mit der Laboreinrichtung wieder ausgebaut und abgebaut werden.

Den beschriebenen Vorteilen stehen jedoch schwerwiegende Nachteile gegenüber. Durch den Verzicht auf die Integration von Rohren, Kabeln und Leitungen in das Bauwerk sind die Installationsstation sowie die Rohre, Kabel und Leitungen innerhalb des Laborraumes zu verlegen, wodurch mehr Platz in Anspruch genommen wird. Da die Vorrichtung Bestandteil der Laboreinrichtung ist, entstehen weitere Einschränkungen. Der Bauherr kann die Medienversorgung nicht in einer ersten Bauetappe erledigen und anschliessend eine ihm passende Laboreinrichtung installieren. Ferner fehlt die normalerweise gewünschte Flexibilität. Sofern das Labor in eine Werkstatt umgebaut werden soll, wird mit der Laboreinrichtung die Medienversorgung entfernt und muss erneut aufgebaut werden. Ferner besteht auch eine beschränkte Flexibilität hinsichtlich der Vornahme von Änderungen der installierten Laboreinrichtung. Sofern der Laborraum von Leitungen, gegebenenfalls schweren Stromschienen durchquert werden soll, sollen und dürfen diese normalerweise nicht in die Laboreinrichtung integriert werden, weshalb ein zusätzlicher Installationsaufwand resultiert.

Der vorliegenden Erfindung liegt daher die Aufgabe zugrunde, eine verbesserte Vorrichtung für die Medien- und Energieversorgung sowie ein Verfahren zur Installation dieser Vorrichtung zu schaffen.

Die erfindungsgemässe Vorrichtung, die mit geringen Kosten und geringem Aufwand herstellbar sein soll, soll es erlauben, beliebige Labor- und Werkstatteinrichtungen in einem Raum zu installieren und mit geringem Aufwand an geänderte Bedürfnisse anzupassen.

Ferner sollen anhand der erfindungsgemässen Vorrichtung auch Übertragungsvorrichtungen für Medien und Energie problemlos installierbar sein, die nicht für die lokale Labor- und Werkstatteinrichtung vorgesehen sind.

Weiterhin soll die erfindungsgemässe Vorrichtung innerhalb des Labors oder der Werkstatt nur wenig Platz in Anspruch nehmen und optisch nicht störend in Erscheinung treten.

Mittels des erfindungsgemässen Verfahrens soll die Vorrichtung die erfindungsgemässe Vorrichtung rasch aufgebaut und installiert werden können.

Diese Aufgabe wird mit einer Vorrichtung und einem Verfahren gelöst, welche die in Anspruch 1 bzw. 8 angegebenen Merkmale aufweisen. Vorteilhafte Ausgestaltungen der Erfindung sind in weiteren Ansprüchen angegeben.

Gemäss der DE 29805278 U gibt es eine schnellbau Montagevorrichtung für linearen Installationsschächte

Die Vorrichtung, die der Medien- und Energieversorgung innerhalb eines Raumes, eines Labors, einer Werkstatt, einer Halle oder dergleichen dient, besteht aus mit einer Decke verbindbaren Deckenstützen, die mit Längs- und/oder Querprofilen miteinander derart verbunden sind, dass eine Vorrichtung zum Halten von Übertragungsvorrichtungen und/oder dafür vorgesehenen Montagevorrichtungen gebildet wird.

Nach dem erfindungsgemässen Verfahren wird die Vorrichtung aufgebaut und installiert, indem
a) die Positionen (Rastermasse) der Deckenstützen am Boden markiert werden;
b) die am Boden markierten Positionen vorzugsweise senkrecht auf die Decke abgebildet und entsprechend an der Decke markiert werden;
c) an den an der Decke vorgesehenen Montagepositionen vorzugsweise nivellierbare Befestigungselemente vorgesehen werden;
d) die Vorrichtung am Boden aufgebaut wird, indem die Deckenstützen an den gemäss a) am Boden markierten Positionen aufgestellt und mit den Längs- und/oder Querprofilen verbunden werden; und
e) indem die am Boden vormontierte Vorrichtung gesamthaft angehoben und mit den Befestigungselementen gemäss c) verbunden wird.

Die Befestigungselemente sind vorzugsweise je mittels nur einer einzigen Schraube oder einer einzelnen Gewindestange mit der Decke verbunden.

Die erfindungsgemässe Vorrichtung kann auf die beschriebene Art mit geringem Aufwand am Boden vollständig vormontiert und ebenfalls mit minimalem Aufwand mittels an den Deckenstützen vorgesehenen Verbindungselementen mit den an der Decke vormontierten Befestigungselementen verbunden werden, wobei die Verbindungselemente und die Befestigungselemente beim Gegeneinanderschieben vorzugsweise automatisch einen Klinkenverschluss· und/oder einen Hakenverschluss bilden. Bei einem Klinkenverschluss ist ein Verschlusselement vorgesehen, dass nach dem Gegeneinander- oder Ineinanderschieben der Verbindungselemente und der Befestigungselemente beispielsweise zurückgestossen wird und anschliessend in einen Aufnehmer vordringen kann, so dass automatisch eine formschlüssige Verbindung resultiert. Die Verschlussteile können jedoch beliebig ausgestaltet und bewegt, und selbstverständlich gegenseitig austauschbar sein.

Vorzugsweise wird ein Klinkenverschluss verwendet, der es erlaubt, die Verbindungselemente und die Befestigungselemente axial ineinander zu verschieben, so dass sie sich automatisch arretieren. Durch die Verwendung von Klinkenverschlüssen oder Hakenverschlüssen kann die Verbindung deckenseitig ohne lokale manuelle Unterstützung erfolgen.

Mit dem erfindungsgemässen Verfahren gelingt es daher, die der Medien- und Energieversorgung dienende Vorrichtung und die entsprechenden Montage- und Übertragungsvorrichtungen mit einfachen Massnahmen zwischen einer Rohdecke und einer mit der Vorrichtung verbundenen abgehängten Decke zu montieren, was gemäss der DE 101 27 272 A1 sich früher sehr aufwendig gestaltete.

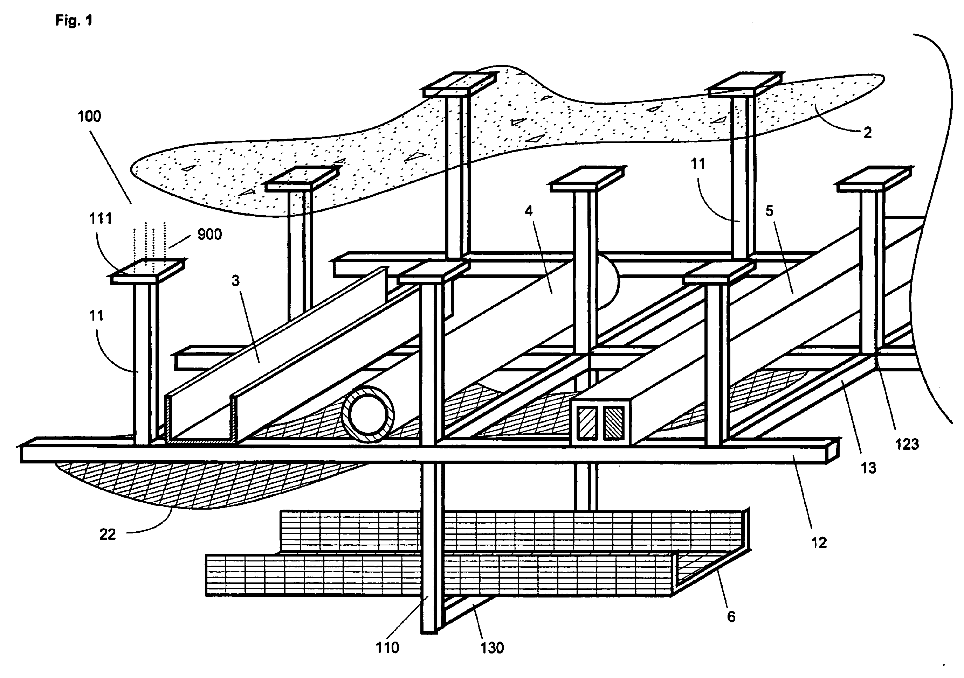

Die Deckenstützen müssen nicht zeitraubend einzeln mit der Decke verschraubt und gegebenenfalls wieder gelockert und justiert werden, um die erforderlichen gegenseitigen Abstände einzustellen. Die Deckenstützen ein und derselben Vorrichtung sind im Gegenteil alle gleich lang und brauchen nicht nivelliert zu werden, weil die Nivellierung erfindungsgemäss mittels der nivellierbaren Befestigungselemente erfolgt. Dadurch entfallen die in Figur 1 beispielsweise gezeigten vier Schrauben 900, mittels denen die zugehörige Deckenstütze 11 nivelliert wurde.

Der Aufbau der Vorrichtung kann rasch und gefahrlos am Boden vollzogen werden, wonach die Vorrichtung mit Hebewerkzeugen, Hebebühnen, Seilzügen oder Gabelstaplern schnell und sicher angehoben und mit den Befestigungselementen verbunden werden kann.

Zum Ausgleich von Mess- und Montageabweichungen sowie Deckenunebenheiten können flexible oder mit grossen Kontaktöffnungen versehene Verbindungs- und/oder Befestigungsvorrichtungen verwendet werden.

In Figur 1 ist eine bekannte Vorrichtung 100 gezeigt, die aus mit einer Decke 2 verbundenen Deckenstützen 11 besteht, an denen Längs- und Querprofile 12, 13 mittels Schrauben 123 montiert sind. Die Verbindung von Profilen, beispielsweise Hohlprofilen oder L-, T-, C-Profilen, oder vorgesehenen Flanschen mittels Schraubenmaterial oder weiteren Verbindungselementen wie Haken und Stifte ist dem Fachmann bekannt. Die Realisierung dieser ästhetisch meist unvorteilhaften Verbindungen erfordert jedoch oft einen hohen Arbeitsaufwand. Mittels erfindungsgemäss ausgestalteten Deckenstützen, die mehrere Säulen und eine Bodenplatte aufweisen, lassen sich jedoch ästhetisch vorteilhafte Verbindungen mit minimalem Aufwand realisieren.

Die erfindungsgemässe Vorrichtung schliesst den Raum oben ästhetisch vorteilhaft mit einer Art abgehängter Decke ab, und erlaubt die flexible Nutzung des Raumes und den beliebigen Umbau der darin vorgesehenen Labor- oder Werkstattvorrichtungen.

Nachfolgend wird die Erfindung anhand von Zeichnungen näher erläutert. Dabei zeigt:
- Figur 1: eine bekannte, der Medien- und Energieversorgung dienende Vorrichtung 100, die aus mit einer Decke 2 verbundenen Deckenstützen 11 besteht, die mit Längs- und Querprofilen 12, 13 miteinander derart verbunden sind, dass eine Vorrichtung zum Halten von Übertragungsvorrichtungen 4, 5 und/oder dafür vorgesehenen Montagevorrichtungen 3, 6 gebildet wird;
- Figur 2: ein Boden 222 mit Markierungen B1, ..., B9 für die Deckenstützen 11 einer erfindungsgemässen Vorrichtung und eine Decke 2, auf die Markierungen B1, ..., B9 abgebildet sind, um Markierungen D1, ..., D9 für die Montagepositionen von Befestigungselementen 9 zu erhalten;
- Figur 3: den Boden 222 und die Decke 2 von Figur 2 nach der Montage der Befestigungselemente 9 und während der Positionierung einer Deckenstütze 11 über einer zugehörigen Markierung B1;
- Figur 4: die am Boden 222 fertig montierte Vorrichtung 1 und, in einer ersten Ausgestaltung, ein an der Markierung D1 in der Decke 2 montiertes Befestigungselement 9;
- Figur 5: ein Befestigungselement 9 und ein mit einer Deckenstütze 11 verbundenes Verbindungselement 111 in einer vorzugsweisen Ausgestaltung;
- Figur 6: das Befestigungselement 9 von Figur 5 von unten gesehen.
- Figur 7: in einer zweiten Ausgestaltung, ein an der Markierung D1 in der Decke 2 montiertes Befestigungselement 9, das mit zwei drehbar und elastisch gelagerten Klinken 922 versehen ist;
- Figur 8: das Befestigungselement 9 von Figur 5, das axial in ein Verbindungselement 111 einführbar ist, das mittels eines Innengewindes 11113 mit einer Deckenstütze 11 verbindbar ist;
- Figur 9: das Befestigungselement 9 von Figur 6 nach der Kopplung mit dem Verbindungselement 111; und
- Figur 10: eine vorzugsweise ausgestaltete Deckenstütze 11.

Figur 1 zeigt eine bekannte, der Medien- und Energieversorgung dienende Vorrichtung 100, die aus mit einer Decke 2 verbundenen Deckenstützen 11 besteht, die mit Längs- und Querprofilen 12, 13 miteinander derart verbunden sind, dass eine Vorrichtung zum Halten von Übertragungsvorrichtungen 4, 5 und/oder dafür vorgesehenen Montagevorrichtungen 3, 6 gebildet wird. Wie in der DE 101 27 272 A1 bestätigt, gestaltet sich die Montage dieser Vorrichtung 100 sehr aufwendig. Dabei werden die mit Flanschelementen 111 versehenen Deckenstützen 11 einzeln, in der Regel mittels vier Schrauben 900 an der Decke 2 befestigt, wonach benachbarte Deckenstützen 11 mittels den Längs- und Querprofilen 12, 13 miteinander verbunden werden. Die Montagearbeiten erfolgen daher im Wesentlichen auf Leitern oder Montagepodesten nahe der Decke 2, wodurch Montagegeschwindigkeit und Handlungsspielraum des Monteurs deutlich eingeschränkt ist. Ferner muss der Monteur weit über dem Boden 2 mit schweren Gegenständen hantieren, wodurch Ermüdungserscheinungen und Gefahren auftreten können.

Erfindungsgemäss wird daher das folgende Montageverfahren vorgeschlagen, durch das die bekannten Nachteile vermieden werden.

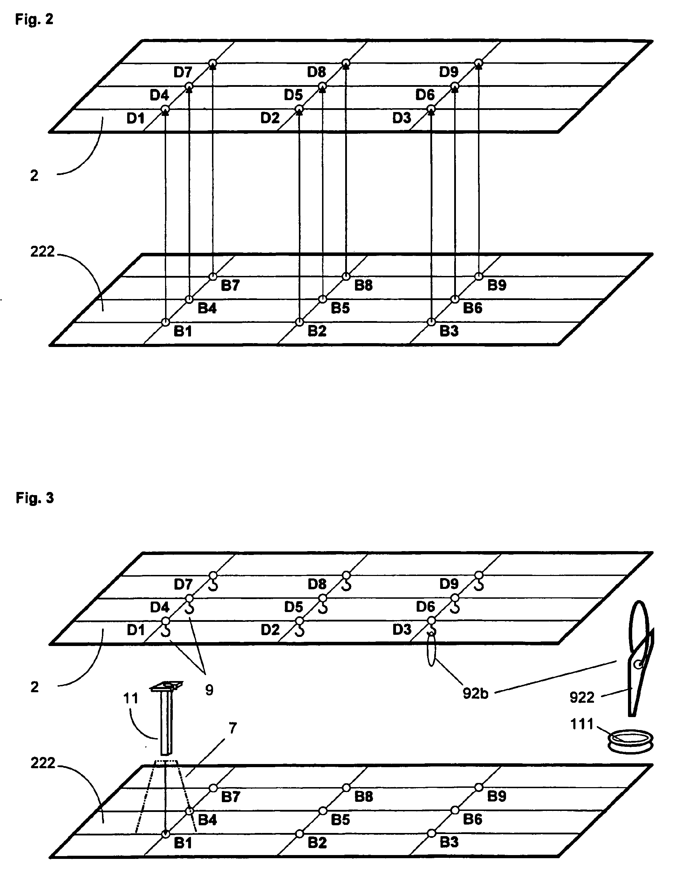

Wie in Figur 2 gezeigt, werden die Positionen der Deckenstützen 11 in einem ersten Schritt am Boden 222 markiert. Anschliessend werden die am Boden 222 vorgesehenen Markierungen B1, ..., B9 vorzugsweise senkrecht auf die Decke 2 abgebildet und entsprechende Markierungen D1, ..., D9 für Befestigungselemente 9 an der Decke 2 angebracht.

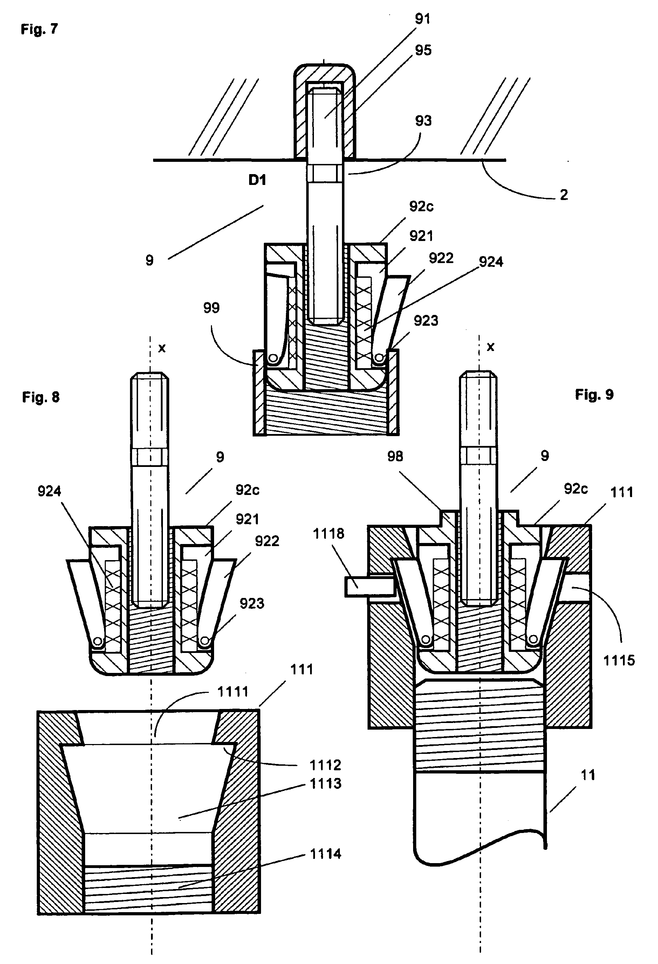

Wie in Figur 3 gezeigt, werden nun die Befestigungselemente 9 an den an der Decke 2 angebrachten Markierungen D1, ..., D9 eingesetzt und vorzugsweise in der Höhe genau ausnivelliert, weil Beton-Rohdecken unterseitig weder horizontal noch plan sind. Die Befestigungselemente 9 bzw. deren Auflageflächen (z.B. 922 in Fig. 7) bilden, nach Nivellierung aller Befestigungselemente 9, eine horizontale, plane Fläche.

Anschliessend beginnt der Aufbau der Vorrichtung 1, indem die Deckenstützen 11 über den zugehörigen Markierungen B1, ..., B9 am Boden 222 positioniert werden. Um die Deckenstützen 11 in Position zu halten, werden vorzugsweise passende Gestelle oder Fixierungen 7 vorgesehen.

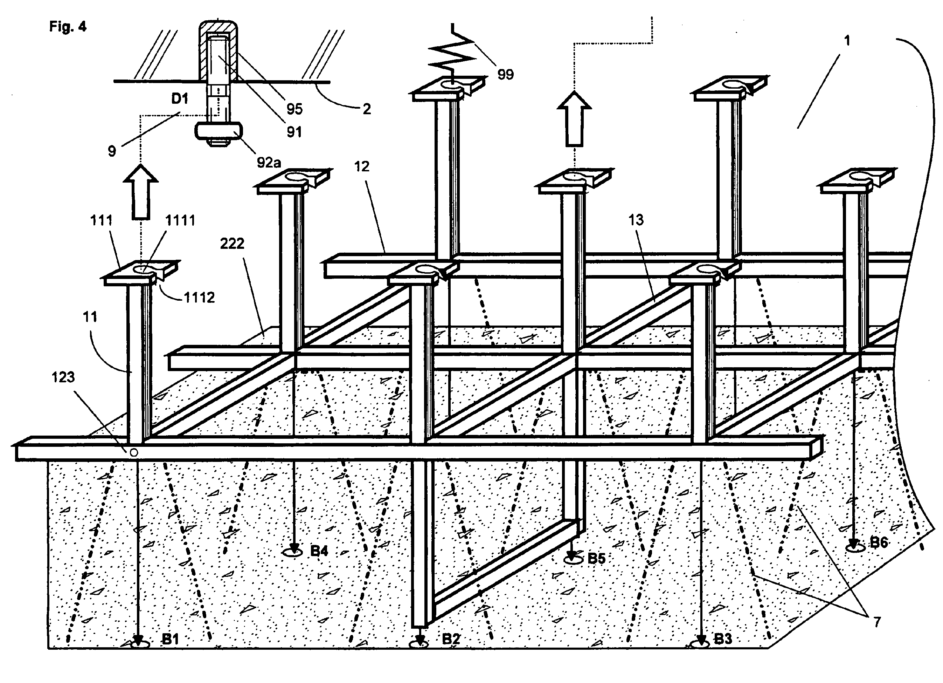

Wie in Figur 4 gezeigt, kann de gesamte Vorrichtung 1 am Boden 222 vollständig aufgebaut werden, indem die Deckenstützen 11 mit Längs- und/oder Querprofilen 12, 13 verbunden werden, die eine passende Länge aufweisen oder die gegeneinander verschiebbar sind und in verschiedenen Positionen fixiert werden können. Beispielsweise werden teleskopartig ausziehbare Profile oder Profile mit mehreren Bohrungen verwendet, durch die die Montageschrauben 123 an passenden Stellen hindurch geführt und fixiert werden können. Diese Arbeiten am Boden 222 sind selbst durch Lehrlinge oder Hilfspersonal rasch und gefahrlos durchführbar und können anschliessend durch eine Aufsichtsperson kontrolliert werden.

Nach der Vormontage wird die Vorrichtung 1, wie in Figur 4 skizziert, angehoben und im selben Montageschritt mit allen Befestigungselementen 9 verbunden, die in der in Fig. 4 gezeigten Ausgestaltung eine mittels eines Dübels 95 in der Decke 2 gehaltene Gewindestange 91 aufweisen, an der ein mit einem Innengewinde versehener Ring 92 oder eine Schraubenmutter vorgesehen ist. Die Deckenstützen 11 weisen ein zur Aufnahme der Gewindestange 91 und des Rings 92 geeignetes Hohlprofil, beispielsweise ein U-Profil, auf, das oben mit einer als Verbindungselement 111 dienenden Flanschplatte abgeschlossen ist, die einen der Aufnahme der Gewindestange 91 dienenden Ausschnitt 1111 aufweist.

In Figur 4 ist ferner schematisch ein in das Verbindungselement 111 eingehängtes Federelement 99 gezeigt. Durch die Verwendung von Federelementen 99, die zwischen den Verbindungselementen 111 und den Befestigungselementen 9 angeordnet werden, wird ein automatischer Lastausgleich zwischen den Deckenstützen erzielt.

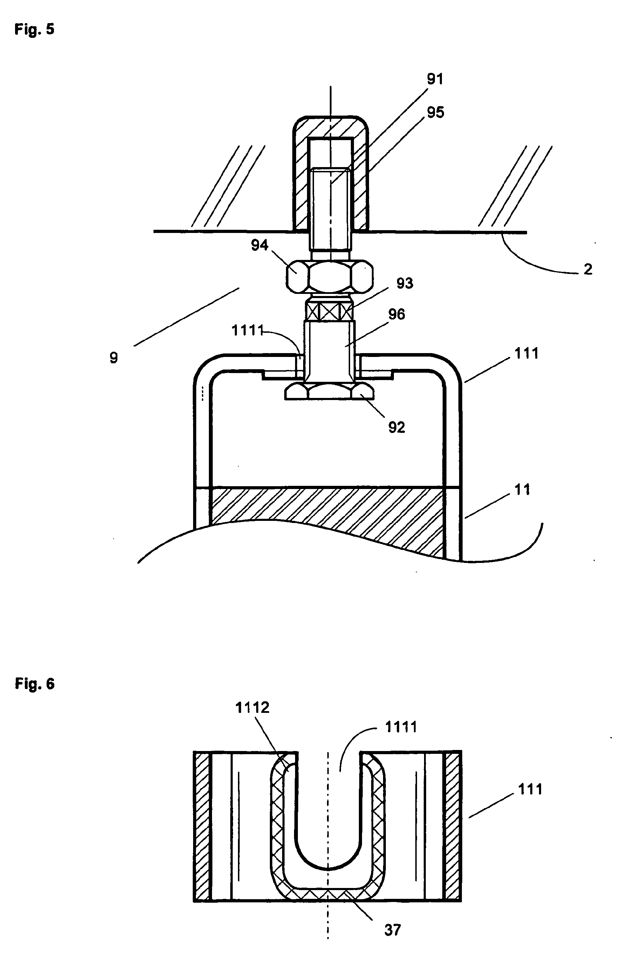

Figur 5 zeigt ein Befestigungselement 9 und ein mit einer Deckenstütze 11 verbundenes Verbindungselement 111 in einer vorzugsweisen Ausgestaltung. Figur 6 zeigt das Befestigungselement 9 von Figur 5 in einer Schnittdarstellung von unten gesehen. Das Befestigungselement 9 umfasst eine Schraube mit einem in den Dübel 95 eindrehbaren Schaft 91 und einem Kopf 92, der in eine Öffnung 1111 des Verbindungselements 111 seitlich einführbar ist und darin von einem Kragen 1112 gehalten wird. Der Kragen 1112 verhindert das selbsttätige Drehen und das Lösen der Schraube, erlaubt jedoch das Justieren der Schraube, die an Abkantungen 93 am Schaft 91 erfasst und gedreht werden kann. Nach dem Justieren kann die Schraube mittels einer Kontermutter 94 gesichert werden, die auf ein Gewinde 96 gedreht wird. Diese bisher für Schiebetüren verwendete Aufhängevorrichtung ist aus der US 614'588 B1 bekannt.

Etwas unvorteilhaft bei der in Figur 4 und Figur 5 gezeigten Vorrichtung ist, dass die Vorrichtung 1 seitlich eingehängt werden muss. Die in den Figuren 7 bis 9 gezeigten Befestigungs- und Verbindungsvorrichtungen 9, 111 können hingegen durch axiales Ineinanderschieben miteinander gekoppelt werden. Diese Befestigungsvorrichtungen 9 weisen mit einem Innengewinde und mit zwei Klinken 922 versehene Montageblöcke 92c auf. Die Klinken 922 sind in Ausnehmungen 921 angeordnet und mittels Wellen 923 drehbar gelagert. In den Ausnehmungen 921 sind elastische Elemente 924, beispielsweise Federelemente oder Kunststoffelemente, vorgesehen mittels denen die Klinken nach aussen gedrückt und dort in Position gehalten werden.

Das Verbindungselement 111 weist einen der Aufnahme des Montageblocks 92c dienenden Kanal 1111 auf, in dem ein nach oben geöffneter Trichter 1113 vorgesehen ist, der am oberen Ende durch einen Innenflansch 1112 begrenzt ist. Beim Einschieben des Montageblocks 92c in den Kanal 1111 werden die Klinken 922 in die Ausnehmungen 921 gedrückt, bis sie innerhalb des Trichters 1113 wird nach aussen treten können, wonach sie beim Absenken der Vorrichtung 1 auf den Innenflansch 1112 auftreffen. Zum Lösen der Klinken 922 weist der Montageblock 92c Bohrungen 1115 auf. An oberen Abkantungen 98 kann der Montageblock 92c erfasst und justiert werden. An der Unterseite des Kanals 1111 ist ein Innengewinde 1114 vorgesehen, das mit einem passenden Endstück der Deckenstütze 11 verschraubt werden kann.

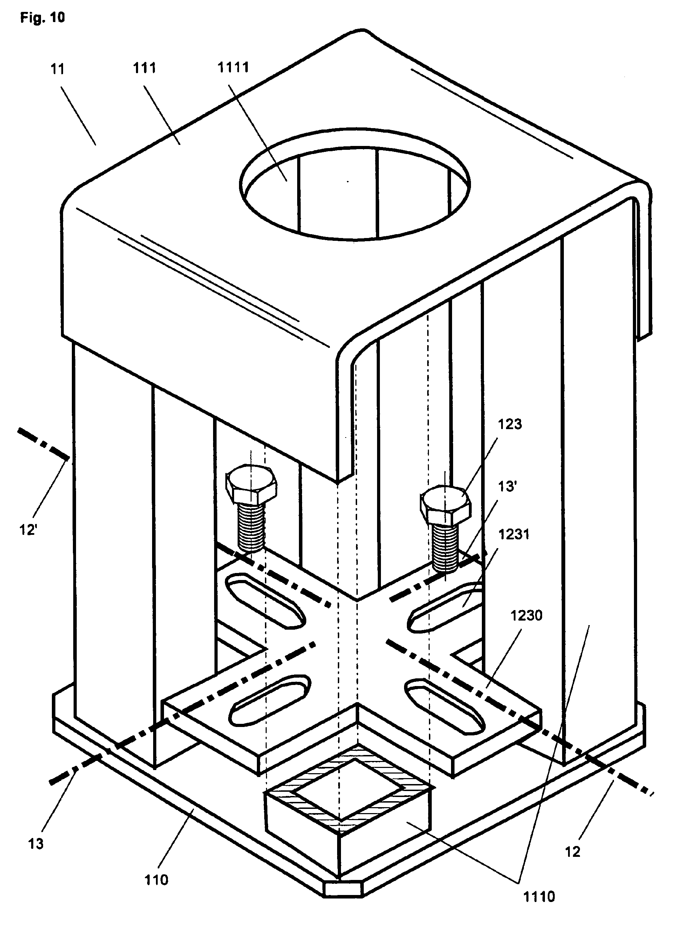

Figur 10 zeigt eine vorzugsweise ausgestaltete Deckenstütze 11, die ein mit einer Öffnung 1111 versehenes Verbindungselement 111 aufweist, das mittels vier Säulen 1110 mit einer Bodenplatte 110 verbunden ist, welche die Verbindung zwischen der Deckenstütze 11 und den montierten Längs- und Querprofile 12, 12', 13, 13' nach unten abdeckt. Die Enden der Längs- und Querprofile 12, 12', 13, 13' können daher zwischen die Säulen 1110, beispielsweise Hohlprofile oder C-Profile, eingeschoben und befestigt werden. Die Möglichkeiten zur Befestigung der Längs- und Querprofile 12, 12', 13, 13' sind vielfältig. Beispielsweise kann ein mehrarmiges beispielsweise kreuzförmiges Verbindungselement 1230 mit Öffnungen 1231 vorgesehen sein, mittels dessen die Längs- und Querprofile 12, 12', 13, 13' anhand der Schrauben 123 miteinander verbunden werden. Möglich ist ferner, die Bodenplatte 110 mit Stiften oder Gewindestangen oder Gewindebohrungen zu versehen, in die die Längs- und Querprofile 12, 12', 13, 13' eingehängt bzw. die Schrauben 123 eingedreht werden. Auch diese Deckestütze 11 kann automatisch mit dem in Figur 9 gezeigten Befestigungselement 9 verbunden werden, sofern die Auslenkung der Verschlusselemente 922 beispielsweise mittels der gezeigten Hülse begrenzt wird.

Die erfindungsgemässe Vorrichtung 1 wurde in bevorzugten Ausgestaltungen beschrieben und dargestellt. Anhand der erfindungsgemässen Lehre sind jedoch weitere fachmännische Ausgestaltungen realisierbar. Insbesondere sind beliebige Ausgestaltungen der Vorrichtung 1 realisierbar. Ferner sind ausgehend von der erfindungsgemässen Lösung weitere Ausgestaltungen der Befestigungselemente 9 und der Verbindungselemente 111 in fachmännischer Weise realisierbar. Beispielsweise sind Verschlusselemente auch als gelenkig gelagerte oder elastisch gehaltene Widerhaken realisierbar.

## Patentansprüche

1. Vorrichtung (1) für die Medien- und Energieversorgung innerhalb eines Raumes bestehend aus mit einer Decke (2) verbindbaren Deckenstützen (11), die mit Längs- und/oder Querprofilen (12, 13) miteinander derart verbunden sind, dass eine Vorrichtung zum Halten von Übertragungsvorrichtungen (4, 5) und/oder dafür vorgesehenen Montagevorrichtungen (3, 6) resultiert, **dadurch gekennzeichnet, dass** die am Boden (222) vormontierte Vorrichtung (1) an den Deckenstützen (11) vorgesehene Verbindungselemente (111) aufweist, die mit an der Decke (2) vormontierten Befestigungselementen (9) verbindbar sind, wobei die Verbindungselemente (111) und die Befestigungselemente (9) wenigstens ein festes, elastisches, elastisch gehaltenes oder elastisch gelagertes Verschlusselement (922) aufweisen, mittels dessen beim Gegeneinanderschieben der Verbindungselemente (111) und der dazu korrespondierenden Befestigungselemente (9) im selben Montageschritt vorzugsweise automatisch je ein Verschluss zwischen den Verbindungselementen (111) und den dazu korrespondierenden Befestigungselementen (9) resultiert.

2. Vorrichtung (1) nach Anspruch 1, **dadurch gekennzeichnet, dass** die Verschlusselemente (922) durch Schlaufen, Haken, elastische Ringe, elastisch gelagerte Klinken oder Platten gebildet werden, die je mit dazu korrespondierenden Halteelementen (1111, 1112, 1113), wie Trichter, Nuten, Nutenringe, Aufnehmer, Ringe, zusammenwirken.

3. Vorrichtung (1) nach Anspruch 2, **dadurch gekennzeichnet, dass** die erfolgte Verbindung zwischen den Verschlusselementen (922) und den Halteelementen (1111, 1112, 1113) mittels Elementen (1118) optisch erkennbar ist, die nach erfolgter Verbindung vorzugsweise sichtbar verschoben oder sichtbar freigelegt sind.

4. Vorrichtung (1) nach Anspruch 1, 2 oder 3, **dadurch gekennzeichnet, dass** die Befestigungselemente (9) in die Decke (2) eingelassene Haken oder Gewindestangen sind, die mit ein- oder mehrteiligen Halteelementen verbunden sind und/oder dass die Befestigungselemente (9) eine Montageschraube (91) und ein höhenverstellbares Halteelement (92) aufweisen und/oder dass die Befestigungselemente (9) je mittels einer einzigen Schraube (91) mit der Decke (2) verbunden sind.

5. Vorrichtung (1) nach Anspruch 4, **dadurch gekennzeichnet, dass** die Halteelemente mit einem Innengewinde versehene Konterelemente, gegebenenfalls mit einer Klinke (922) versehene Schlaufen, oder mit einem Innengewinde und mit wenigstens einer Klinke (922) versehene Montageblöcke (92c) sind.

6. Vorrichtung (1) nach einem der Ansprüche 2-5, **dadurch gekennzeichnet, dass** das Verbindungselement (111) eine Öffnung oder einen Kanal (1111) zur axialen oder seitlichen Aufnahme und wenigstens einen an die Öffnung oder den Kanal (1111) angrenzenden Endanschlag (1112; 11112) zum Halten des Konterelements oder der Klinke (922) aufweist oder dass das Verbindungselement (111) zum Halten der Schlaufe geeignet ist.

7. Vorrichtung (1) nach einem der Ansprüche 2-6, **dadurch gekennzeichnet, dass** die Verbindungselemente (111) mittels elastischen Elementen (924) mit den Befestigungselementen (9) verbunden sind und/oder dass die Verbindungselemente (111) und/oder die Befestigungselemente (9), nivellierbar ausgestaltet, gegebenenfalls mit Gewindevorrichtungen versehen sind, so dass der Abstand der Deckenstützen (11) von der Decke (2) einstellbar ist.

8. Vorrichtung (1) nach einem der Ansprüche 1 - 7, **dadurch gekennzeichnet, dass** an der Unterseite der Vorrichtung (1) vorzugsweise lösbar montierte Elemente vorgesehen sind, die einen deckenartigen Abschluss bilden.

9. Vorrichtung (1) nach einem der Ansprüche 1 - 8, **dadurch gekennzeichnet, dass** die Deckenstütze (11) ein Verbindungselement (111) aufweist, das mittels mehrer Säulen (1110) mit einer Bodenplatte (110) derart verbunden ist, dass zu montierende Längs- und Querprofile (12, 12', 13, 13') zwischen die Säulen (1110) einschiebbar und mit der Deckenstütze (11) und/oder mittels eines mehrarmigen, gegebenenfalls kreuzförmigen Verbindungselements (1230) miteinander verbindbar sind.

10. Verfahren zur Installation der Vorrichtung (1) gemäss einem der Ansprüche 1 - 9, **dadurch gekennzeichnet, dass**
a) die Positionen (B1, ..., Bn) der Deckenstützen (11) am Boden (222) markiert werden;
b) die am Boden (222) markierten Positionen (B1, ..., Bn) vorzugsweise senkrecht auf die Decke (2) abgebildet und entsprechende Montagepositionen (D1, ..., Dn) an der Decke (2) markiert werden;
c) an den Montagepositionen (D1 ..., Dn) je ein Befestigungselement (9) an der Decke (2) eingesetzt wird;
d) die Vorrichtung (1) am Boden (222) aufgebaut wird, indem die Deckenstützen (11) an den am Boden (222) markierten Positionen (B1, ..., Bn) aufgestellt und mit den Längs- und/oder Querprofilen (12, 13) verbunden werden; und
e) dass die am Boden (222) vormontierte Vorrichtung (1) gesamthaft angehoben und mit den Befestigungselementen (9) verbunden wird.

11. Verfahren nach Anspruch 10, **dadurch gekennzeichnet, dass** die Deckenstützen (11) mit den Befestigungselementen (9) mittels eines Klinkenverschlusses und/oder eines Hakenverschlusses, durch axiales oder seitliches Einführen, Einhängen oder Einklinken verbunden werden.

12. Verfahren nach Anspruch 10 oder 11, **dadurch gekennzeichnet, dass** die Befestigungselemente (9) mittels einer Schraube mit der Decke verbunden werden und/oder die Befestigungselemente (9) justiert werden, bevor sie mit der Vorrichtung (1) verbunden werden.

13. Verfahren nach Anspruch 10, 11 oder 12, **dadurch gekennzeichnet, dass** die Übertragungsvorrichtungen (4, 5) und/oder die dafür vorgesehenen Montagevorrichtungen (3, 6) während des Aufbaus der Vorrichtung (1) am Boden und/oder nach der Montage der Vorrichtung (1) an der Decke (2) in der Vorrichtung montiert oder abgelegt werden.

## Claims

1. Device (1) for media- and energy supply within a room, consisting of ceiling supports (11) connectable to a ceiling (2) and connected with longitudinal and/ or transverse profiles (12, 13) with one another in such a way, that a device for holding of transmission equipment (4, 5) and/or mounting devices (3, 6) therefore results, **characterised in that** the device (1), which is preassembled on the floor (222), comprises connecting units (111) provided on the ceiling supports (11), which are connectable to fastening units (9), wherein the connecting units (111) and the fastening units (9) comprise at least one rigid, elastically held or elastically supported locking element (922), with which when moving the connecting units (111) and the corresponding fastening units (9) against each other in the same mounting step, preferably automatic, a catch results between the connecting units (111) and the corresponding fastening units (9).

2. Device (1) according to claim 1, **characterised in that** the locking elements (922) are formed by loops, hooks, elastic rings, elastically supported catches or plates, which interact with holding elements (1111, 1112, 1113) corresponding thereto, such as funnels, slots, slotted rings, receiver, rings.

3. Device (1) according to claim 2, **characterised in that** the resultant connection between the locking elements (922) and the holding elements (1111, 1112, 1113) is optically observable by means of elements (1118) that preferably are visibly shifted or visibly uncovered, after the connection has been effected.

4. Device (1) according to claim 1, 2 or 3, **characterised in that** the fastening units (9) are hooks or threaded roods that are inserted into the ceiling and that are connected with one part or multipart holding elements and/or that the fastening units (9) comprise a mounting screw (91) and a holding element (92) that is adjustable in height, and/or that the fastening units (9) each are connected with the ceiling (2) by means of a single screw (91).

5. Device (1) according to claim 4, **charaterised in that** the holding elements are counter-elements provided with an interior thread, if appropriate are loops provided with a catch (922), or are mounting blocks (92c) provided with an interior thread and with at least one catch (922).

6. Device (1) according to one of the claims 2-5, **characterised in that** the connecting unit (111) comprises an opening or a channel (1111) for sideways or axially receiving and at least one end stop (1112; 11112) neighbouring the opening or the channel (1111) for holding the counter-element or the catch (922) or that the connecting unit (111) is appropriate for holding the loop.

7. Device (1) according to one of the claims 2-6, **characterised in that** the connecting units (111) are connected to the fastening units (9) by means of elastic elements (924) and/or that the connecting units (111) and/or the fastening units (9) can be levelled, and are provided with threaded devices if appropriate, so that the distance of the ceiling supports (11) to the ceiling (2) is adjustable.

8. Device (1) according to one of the claims 1-7, **characterised in that** the on the lower side of the device (1) preferably releasable elements are provided, that forma finish resembling a ceiling.

9. Device (1) according to one of the claims 1-8, **characterised in that** the ceiling support (11) comprises a connecting unit (111), which by means of a plurality of columns (1110) is connected with a base plate (110) in such a way that longitudinal and/ or transverse profiles (12, 12', 13, 13'), which are to be mounted, can be inserted between the columns (1110) and can be connected with the ceiling support (11) and/or by means of a , if appropriate cross-formed, connecting element (1230) with several arms are connectable with one another.

10. Method for the Installation of the device (1) according to one of the claims 1-9 **characterised in that**
a) that the positions (B1, ..., Bn) of the ceiling supports (11) are marked on the floor (222);
b) that the positions (B1, ..., Bn) marked on the floor (222) are copied, preferably at right angle, to the ceiling (2) and that corresponding mounting positions (D1, ..., Dn) are marked on the ceiling (2);
c) that at each of the mounting positions (D1, ..., Dn) a fastening unit (9) is implanted in the ceiling (2);
d) that the device (1) is assembled on the floor (222), by positioning the ceiling supports (11) at the positions (B1, ..., Bn) marked on the floor (222)and by connecting the ceiling supports (11) with longitudinal and/or transverse profiles (12, 13); and
e) that the whole device (1), which has been preassembled on the floor (222), is lifted and connected to the fastening units (9).

11. Method according to claim 10, **characterised in that** the ceiling supports (11) are connected to the fastening units (9) by means of a catch and/or a hook lock, through axially or sideways insertion, hooking or latching.

12. Method according to claim 10 or 11, **characterised in that** the fastening units (9) are connected to the ceiling by means of a screw and/or that the fastening units (9) are adjusted, before they are connected to the device (1).

13. Method according to claim 10 or 11, **characterised in that** the transmission equipment (4, 5) and/or mounting devices (3, 6) provided therefore are mounted or placed in the device during the assembly procedures of the device (1) on the floor and/or after the device (1) has been mounted on the ceiling (2).

## Revendications

1. Dispositif (1) pour l'alimentation de fluides et d'énergie à l'intérieur d'une pièce se composant de montants de support (11) reliables à un plafond (2) qui sont reliés entre eux à des profilés longitudinaux et/ou transversaux (12, 13) de sorte qu'on obtient un dispositif pour le maintien de dispositifs de transmission (4, 5) et/ou de dispositifs de montage (3, 6) prévus à cet effet, **caractérisé en ce que** le dispositif prémonté (1) sur le sol (222) présente des éléments de liaison (111) prévus sur les montants de support (11), éléments qui sont reliables aux éléments de fixation (9) prémontés sur le plafond (2), les éléments de connexion (111) et les éléments de fixation (9) présentant au moins un élément de fermeture (922) fixe, élastique, maintenu élastiquement ou logé élastiquement, dont lors du rapprochement coulissant des éléments de connexion (111) et des éléments de fixation correspondants (9) dans la même étape de montage, il en résulte de préférence automatiquement une fermeture entre les éléments de connexion (111) et les éléments de fixation correspondants (9).

2. Dispositif (1) selon la revendication 1, **caractérisé en ce que** les éléments de fermeture (922) sont formés par des boucles, des crochets, des bagues élastiques, des cliquets ou plaques qui coopèrent avec des éléments de retenue correspondants (1111, 1112, 1113), tels que des entonnoirs, des rainures, des bagues de rainure, des étriers, des bagues.

3. Dispositif (1) selon la revendication 2, **caractérisé en ce que** la connexion établie entre les éléments de fermeture (922) et les éléments de retenue (1111, 1112, 1113) est détectable optiquement par des moyens (1118) qui sont déplacés ou dégagées visiblement après une connexion effectuée.

4. Dispositif (1) selon la revendication 1, 2 ou 3, **caractérisé en ce que** les éléments de fixation (9) sont des crochets ou tiges filetées, enrobés dans le plafond (2) qui sont reliés à des éléments de retenue en une ou plusieurs parties et/ou **en ce que** les éléments de fixation (9) présentent une vis de montage (91) et un élément de retenue réglable en hauteur (92) et/ou **en ce que** les éléments de fixation (9) sont reliés chacun au moyen d'une seule vis (91) au plafond (2).

5. Dispositif (1) selon la revendication 4, **caractérisé en ce que** les éléments de retenue sont des contre-éléments munis d'un filetage interne, éventuellement des boucles munies d'un cliquet (922) ou de blocs de montage (92c) munis d'un filetage femelle et au moins d'un cliquet (922).

6. Dispositif (1) selon l'une des revendications 2-5, **caractérisé en ce que** l'élément de connexion (111) présente une ouverture ou un canal (1111) pour le logement axial ou latéral et au moins une butée d'extrémité (1112; 11112) attenante à l'ouverture ou au canal (1111) pour le maintien du contre-élément ou du cliquet (922) et **en ce que** l'élément de connexion (111) et approprié pour le maintien de la boucle.

7. Dispositif (1) selon l'une des revendications 2 à 6, **caractérisé en ce que** les éléments de connexion (111) sont reliés au moyens d'éléments élastiques (924) aux éléments de fixation (9) et **en ce que** les éléments de connexion (111) et/ou les éléments de fixation (9), sont réalisés de manière nivelable et éventuellement sont munis de dispositifs de filetage de sorte que la distance entre les montants de support (11) et le plafond (2) est réglable.

8. Dispositif (1) selon l'une des revendications 1 à 7, **caractérisé en ce qu'**il est prévu sur la face inférieure du dispositif (1) des éléments montés de manière amovible qui forment une fermeture en forme de plafond.

9. Dispositif (1) selon l'une des revendications 1 à 8, **caractérisé en ce que** les montants support (11) présente un élément de connexion (111) qui est relié au moyen de plusieurs colonnes (1110) à une plaque de sol (110) de sorte que les profilés longitudinaux et transversaux (12, 12', 13, 13') sont insérables entre les colonnes (1110) et sont reliables au montant de support (11) et/ou entre eux au moyen d'un élément de connexion à plusieurs bras et éventuellement cruciforme (1230).

10. Procédé pour l'installation du dispositif (1) selon l'une des revendications 1 à 9, **caractérisé en ce que**
a) les positions (B1, ..., Bn) des montants de support (11) sont marqués sur le sol (222) ;
b) les positions (B1, ..., Bn) marquées sur le sol (222) sont reproduites de préférence perpendiculairement au plafond (2) et des positions de montage correspondantes (D1, ..., Dn) sont marquées sur le plafond (2) ;
c) il est utilisé sur les positions de montage (D1, ..., Dn) un élément de fixation respectif (9) sur le plafond (2) ;
d) le dispositif (1) est monté sur le sol (222) dans le fait que les montants de support (11) sont placés sur les positions (B1, ..., Bn) marquées au sol (222) et sont reliés aux profilés longitudinaux et/ou transversaux (12, 13) et
e) **en ce que** le dispositif (1) prémonté sur le sol (222) est soulevé dans son ensemble et est relié aux éléments de fixation (9).

11. Procédé selon la revendication 10, **caractérisé en ce que** les montants de support (11) sont reliés aux éléments de fixation (9) au moyen d'une fermeture à cliquet et/ou d'une fermeture à crochet par insertion, accrochage ou encliquetage axial ou latéral.

12. Procédé selon la revendication 10 ou 11, **caractérisé en ce que** les éléments de fixation (9) sont reliés au moyen d'une vis au plafond et/ou les éléments de fixation (9) sont ajustés avant d'être reliés au dispositif (1).

13. Procédé selon la revendication 10, 11 ou 12, **caractérisé en ce que** les dispositifs de transmission (4, 5) et/ou les dispositifs de montage prévus à cet effet (3, 6) sont montés ou déposés dans le dispositif pendant le montage du dispositif (1) sur le sol et/ou après le montage du dispositif (1) sur le plafond (2).
